Europäisches Patentamt

European Patent Office

Office européen des brevets

(11) Publication number: **0 238 230 B1**

(12) **EUROPEAN PATENT SPECIFICATION**

(45) Date of publication of patent specification: **23.12.92** (51) Int. Cl.⁵: **G05B 19/04**

(21) Application number: **87301800.6**

(22) Date of filing: **02.03.87**

(54) **Programmable logic device.**

(30) Priority: **06.03.86 US 836782**

(43) Date of publication of application:
**23.09.87 Bulletin 87/39**

(45) Publication of the grant of the patent:
**23.12.92 Bulletin 92/52**

(84) Designated Contracting States:
**AT BE CH DE ES FR GB GR IT LI LU NL SE**

(56) References cited:
**EP-A- 0 244 925**
**WO-A-81/02937**
**FR-A- 2 194 329**
**US-A- 4 336 601**

**WESCON TECHNICAL PAPERS, 30th October - 2nd November 1984, pages 1-14, Anaheim, California, Los Angeles; V.J. COLI et al.: "Next generation programmable logic"**

(73) Proprietor: **ADVANCED MICRO DEVICES, INC.**
**901 Thompson Place P.O. Box 3453**
**Sunnyvale, CA 94088(US)**

(72) Inventor: **Agrawal, Om**
**3055 Rollingwood Circle**
**San Jose California 95148(US)**
Inventor: **Shankar, Kapil**
**247 North Capitol Avenue, No.1283**
**San Jose California 95127(US)**

(74) Representative: **Wright, Hugh Ronald et al**
**Brookes & Martin 52/54 High Holborn**
**London WC1V 6SE(GB)**

## Description

The present invention relates to programmable logic devices, and preferably to such devices suitable for use in control applications, for instance, as sequencers, and having easily-programmable high level logic elements such as a last-in, first-out stack and a random access memory.

Reference may be made to our copending European Patent Application EP-A2-0 244 925 (Article 54(3)-).

<u>PAL and PLA devices</u>

Presently, programmable array logic (PAL) devices, and programmable logic array (PLA) devices find application for controlling digital circuitry, such as in "state machines" or sequencers, requiring flexibility and ease of use. Although such PAL/PLA devices operate with speed and flexibility, they are difficult to program, since they require writing complex Boolean expressions for this purpose. The use of Boolean equations to design the sequencer limits the number of variables available to the designer, typically from eight to sixteen, because of the mathematical difficulties in specifying and simplifying equations having more than eight variables. Moreover, such sequencers require additional external circuitry to provide flexibility as well as additional conditional testing circuitry.

Particular difficulty is encountered when programming and understanding a general PAL or PLA device used to perform higher level logical functions such as counting, state sequencing, branching, or multiple-case testing. No higher level logic blocks such as program counters, last-in, first-out (LIFO) stacks or memories are available in such devices which can be readily programmed or easily understood. Subroutines are a highly-desirable high level language construct, as will be appreciated by those skilled in the art, and provision of a stack affords easy subroutine capability in a control or sequencer program. Omission of a stack means that PAL/PLA-based devices cannot readily support the high level language GOSUB and RETURN constructs. The absence of these higher level elements makes it very difficult to implement sequencers and state machines with high level language-based state machine constructs with PALs and PLAs. Also, lack of these high level elements makes current PAL/PLA device architecture unoptimized for control logic applications.

While to reduce programming effort and to ease understandability, some higher level language (HLL) programming schemes maybe available, there is no direct relationship between such HLL constructs and the underlying hardware. As such, no methodology is available which affords easy design of the microsequencer because no high level constructs are available within the PAL- or PLA-based sequencers corresponding to the high level language constructs most useful to design personnel. Complex, detailed and error-prone Boolean equations must be written presently to accomplish the design of PAL- or PLA-based sequencers and such equations do not bear a one-to-one correspondence to the underlying circuit elements of the PAL- or PLA-based sequencer. Because of all these reasons, PAL/PLA devices are not used for large complex control applications.

<u>PROM-Based Devices</u>

Usually, programmable read-only memory (PROM)-based micro-coded sequencers are used for such control applications. However, such microsequencers have many deficiencies. In particular, PROM-based microsequencers do not provide adequate high level elements for state machine/sequencer design and their architecture is unrelated to the higher level constructs which designers prefer to use.

One such high level element, a programmable counter, not available in the prior art in PROM-based microsequencers, is the subject of the related, copending application. The counter provides the designer with such high level control-sequencing constructs as "multiway" branching, flexible conditional testing and branching, generation of input-dependent outputs, and user-customizable instruction decoding. The resulting device, termed a "programmable logic controller" (PLC), supports a number of high level language constructs with an architecture which bears a strong one-to-one correspondence to the constructs. It avoids the complex architecture of PROM-based microsequencers, having such elements as a testing multiplexer, program counter multiplexer, and an instruction-decode PLA. Such elements also slow execution time of the control or sequencer program and make the program difficult to design and understand.

Another high level element not available in PROM-based microsequencers is a random access memory (RAM). Storage of data within a control sequencer, particularly data which is to be externally updated at certain intervals, entails increased storage locations. In the prior art, this necessitated use of a larger programmable AND and OR arrays than is strictly required for the control function. This resulted from the use, in the prior art, of buried registers for such data storage. Increasing the number of these storage locations results in a very large (exponential) increase in the array size. In turn, the large array makes the control sequencer operate more slowly and increases the cost disproportionately to the resulting gain in storage. Moreover, such storage functionality is not supported by a high level language construed such as READ or WRITE, but must be achieved by writing cumbersone Boolean expressions.

In a programmable logic controller (PLC), as described in our European Patent Application EP-A2-0 244 925, a set of output registers along with a counter and a set of general purpose buried registers constitute the pipeline register of PROM-based microsequencers. The counter in a PLC design provides the functionality of a program counter in the microsequencer design. It also provides the jump address field of the pipeline register. Further, in a PLC device, a programmable AND array performs the addressing functions of the microsequencers, whereas PROM-based microsequencers have fixed AND arrays. Accordingly the present invention provides a programmable logic device comprising:

a programmable array means arranged to be responsive to input signals applied to array inputs to generate a plurality of logic signals;

output means connected to received a first number of said logic signals, and generate a number of device output signals therefrom at an associated number of input/output ports of the device;

a status register connected to receive a second number of said logic signals and arranged to store data derived therefrom and to generate a status word data output signal:

characterised by;

stack means connected to be responsive to a third number of said logic signals as control signals and arranged to store, on a first-in last-out basis, status words passed from said status register, and to remove the last-in contents of the stack and generate therefrom a stack output signal comprising the last stored status word on a status word output thereof.

The stack provides a very useful, and flexible control structure for a state machine. Means can be provided for supplying the stack condition information to the AND array. For instance, STACK EMPTY and STACK FULL indicators can be fedback to the programmable AND array. This allows implementation of complex control structures such as recursive subroutines.

Improved control structure flexibility is provided in the PLC device having the stack. The stack can implement subroutine calls and branching very efficiently. The stack implementation is based on address pointers. The pointers always address the last in location. The pointer also wraps around when the number of PUSH or POP's exceed the number of stack locations. There is also a signal provided to reset this pointer to zero. This signal is also controlled by the OR array and is used most frquently during system initialization.

Another embodiment of the present invention includes a random access memory (RAM) combined with a PAL- or PLA-based programmable logic device. The RAM is very useful for information storage. It provides a very easy means for storage of externally updatable, typically an external central processing unit (CPU), control information. The operation of the device can be made dependent upon this control information. A user can easily program in software also a custom interface to update this information from the external source.

Provision of the RAM provides additional capability of storage of external data, other than so-called "buried registers". Typically in system designs, the external CPU periodically provides information to the controller device. Some examples of this function are DMA controllers, Interrupt Controllers, and video controllers. The RAM can implement this functionality very effectively. The operation of the controller device can be modified depending upon this control information. Also the user can define in software, custom interface to obtain this information from any kind of external source. Such capability does not exist in PAL-, PLA-, or PROM based devices.

The RAM also provides a scratch pad capability. Any address location can be written to or read from, under the control of the OR array. These locations can be used as separate independent counting and timing channels. Such capability also does not exist in prior art sequencers. These independent, programmable counting and timing channels can be used for a variety of system control functions such as refresh timer for memory controller. Such functionality does not exist in prior art sequencers.

Functionality non-existant in existing PROM based microsequencers is possible in the device of the present invention, such as flexible and simpler control of the RAM, opening new application areas. This functionality can be easily controlled by boolean equations for PALs and PLAs and by software in the case of PLC's.

In another embodiment of the instant invention, the RAM is provided within a PLC of the related, copending invention. Alternative preferred embodiments include the stack and the RAM provided for a PAL- or PLA-based sequencer, or for a PLC.

3

Provided in a representative embodiment of a programmable logic device of the instant invention, is a combinatorial logic circuit comprising a programmable AND array and a pair of programmable OR arrays. A first OR array generates logic signals to a set of output macrocells and a random access memory (RAM) served by a set of input/output pins. A second OR array generates logic signals to a set of "buried" internal registers, a counter and a last-in, first-out (LIFO) stack. The second OR array provides a high level logic control sequencing function. The signals generated by certain ones of the output macrocells as well as the internal registers, the RAM and the counter are fedback to the AND array via dedicated internal feedback paths.

The AND array of the programmable logic device of the instant invention can be programmed, in conjunction with the programmable OR array, to generate the required control signals. Furthermore, the number of OR terms dependent on a single product term is quite critical. For enhanced speed, it is important to reduce the size of the OR array so as to eliminate the second gate delay as much as possible. A logic device of the instant invention employs two OR arrays, each performing a dedicated function, either output generation, or sequencer control, thereby reducing the size of each OR array.

In another alternative embodiment, a faster device employs a combinatorial logic circuit comprising a programmable AND array and fixed OR arrays.

BRIEF DESCRIPTION OF THE DRAWINGS

Fig. 1 is a block diagram of an embodiment of a programmable logic device of the instant invention; a Programmable Logic Controller (PLC) having a last-in, first-out stack and a random access memory.

Fig. 2 is a block diagram of the stack mechanism employed in a programmable logic device of the instant invention.

DETAILED DESCRIPTION OF PREFERRED EMBODIMENT

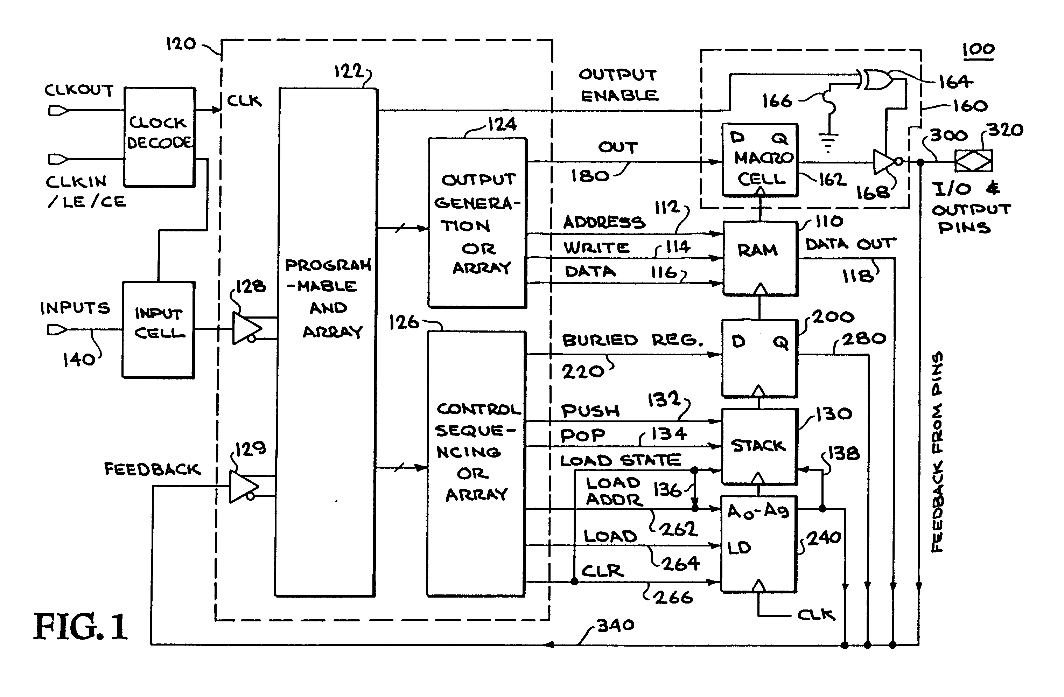

With reference to Fig. 1, a programmable logic controller (PLC) device 100 having a random access memory (RAM) 110 and a subroutine stack 130 high level circuit elements, in addition to a programmable counter 240, is shown. A description of the elements forming the PLC 100 shown in Fig. 1, other than the RAM 110 and the stack 130, is contained in the related, copending application "Flexible Programmable Logic Controller, which description is incorporated by reference herein. To aid in understanding, in the description so-incorporated references to like elements have the same reference numerals as those elements of the instant application.

Following the description of the preferred embodiment illustrated in Fig. 1, are descriptions of alternative embodiments involving PAL- an PLA-based devices employing RAM 110 and/or stack 130.

Briefly, the PLC 100 includes fuse-programmable combinatorial logic circuitry 120 which receives input signals from an external source applied via a set of ten signal lines 140. On the drawing figures, various signal lines are hashmarked, with a numeral adjacent thereto, indicating that a number of signals are conducted in parallel on the lines, even though only one line is shown, the numeral specifying the number of parallel signals. Accordingly, line 140 has the numeral "10" adjacent to a hashmark intersecting line 140. The programmable combinatorial logic circuit 120 can be formed from programmable AND and OR arrays as will be described in detail hereinafter.

A set of twenty-four output macrocells 160, each including an output register 162, receives signals generated by circuit 120 via signal lines 180, as does a set of eight buried registers 200 via signal lines 220. For example, said registers can be conventional flip-flop devices.

A programmable counter 240 also receives signals generated by circuit 120 via signal lines 262, 264 and 266. These signals represent load address and counting control information. Signals representing the contents of the buried registers 200 and the program counter 240 are conducted back, via signal lines 280, to the programmable combinatorial circuit 120 where they form a second input to circuit 120.

Signals representing the contents of output macrocells 160 are conducted via signal lines 300 to input/output (I/O) pins 320 as well a being conducted back via signal lines 340 to combinatorial circuit 120 where they form a third input to circuit 120. The counter 240 is preferably a Gray-code counter. Since the contents of such a counter changes in only one bit location, state transitions are not subject to instabilities which may cause transient errors in the signals generated at I/O pins 320. Furthermore, this results in improved optimization of the Boolean design equations, since adjacent state product terms involve differences of only one bit, as will be appreciated by those skilled in the art.

Briefly, data signals and dynamic control signals generated by the combinatorial logic circuit 120 are conducted to each of the output macrocells 160 and the macrocell generates a signal therefrom which may be selected from the contents of a register within macrocell 160, or the combinatorial data signal received from circuit 120 and causes this signal, in either an active HIGH or active LOW polarity to be conducted to I/O pin 320 for output and feedback to circuit 120, or the macrocell may cause a signal applied at I/O pin 320 to be conducted via signal line 340 to the logic circuit 120. Each buried register 200, also receives data and dynamic control signals from the logic circuit 120 but is not allocated an I/O pin on which the contents of the register can be generated, however, a signal representing the contents of the register is conducted via feedback path 280 to the logic circuit 120 where it can be used for "state" determination.

The contents of the program counter 240 is similarly fedback to the logic circuit 120 for use in "state" determination and, since the external input signals are also available for logic circuit 120, implementation of both a "Mealy" state machine, in which the next-state determination is based on the current state and the inputs, and a "Moore" state machine, based solely on the current state, is readily performed by the PLC 100 of the present invention. The counter 240 can also perform sequencing functions and is readily controlled via the programmable logic circuit 120. The counter 240 receives a LOAD CONTROL signal generated by circuit 120 and a set of LOAD ADDRESS signals which, upon application of the LOAD CONTROL signal, permits setting of the contents of counter 240 to a programmable "state". Loading of the counter in this manner provides a "state branching" function of the PLC 100. Alternatively, by permanently setting the LOAD CONTROL signal HIGH, the counter 240 can function as a set of extra buried registers. Counter 240 also receives a COUNTERCLEAR (CLR) signal from logic circuit 120, which, when asserted, resets the counter to a predetermined "start" state, such as "OO"Hex.

The PLC 100 includes a RAM 110 used for data storage. RAM 110 receives the CLK timing signal received by registers 162 and 200 and counter 240. An address signal generated by an OR output generation array 124 portion of combinatorial circuit 120 is conducted to the RAM 110 via a signal line 112. In the preferred embodiment, the RAM 110 has eight storage locations and, accordingly, the address signals would be carried on line 112 in a time-multiplexed manner, or alternatively, a set of three signal lines could be used to carry binary-encoded address signals in parallel. A write enable signal generated by OR array 124 is conducted to the RAM 110 via a signal line 114 and a set of eight data signal lines 116 conduct data generated by OR array 124 to RAM 110 for storage therein. Application of the write enable signal causes the data applied via signal lines 116 to be stored in the RAM location specified by the address signals received via signal line 112, upon reception of the next clock signal.

A set of eight data signal lines 118 conduct the data stored within the RAM 110, at the location specified by the address signals on line 112, to a programmable AND array 122 portion of combinatorial circuit 120 via feedback path 340, upon reception of the next clock signal. When no RAM address is specified, a default address of ZERO is used to store or retrieve data from RAM 110.

The data stored in RAM 110, controlled by software as will be explained hereinafter, can be an internal constant or a variable value, or data applied to the AND array 122 via input lines 140. A typical application of RAM 110 is as a "scratchpad", which permits separate programmable counting and timing channels such as is required for a refresh timer for a memory controller.

The PLC 100 also includes a last-in, first-out stack 130 providing subroutine capability to the PLC 100. Stack 130 receives the CLK timing signal received by the RAM 110, the registers 162 and 200, and the counter 240, and on signal line 266, the CLR signal received by the counter 240. A PUSH signal and a POP signal generated by a control sequencing OR array 126 portion of combinatorial circuit 120 is conducted to the stack 130 via signal lines 132 and 134, respectively. The counter 240 receives a set of LOAD STATE signals via signal lines 136, in addition to the LOAD ADDRESS signals received from OR array 126, via signal lines 262. Signals representing the contents of counter 240 are conducted via signal lines 138 to the stack 130.

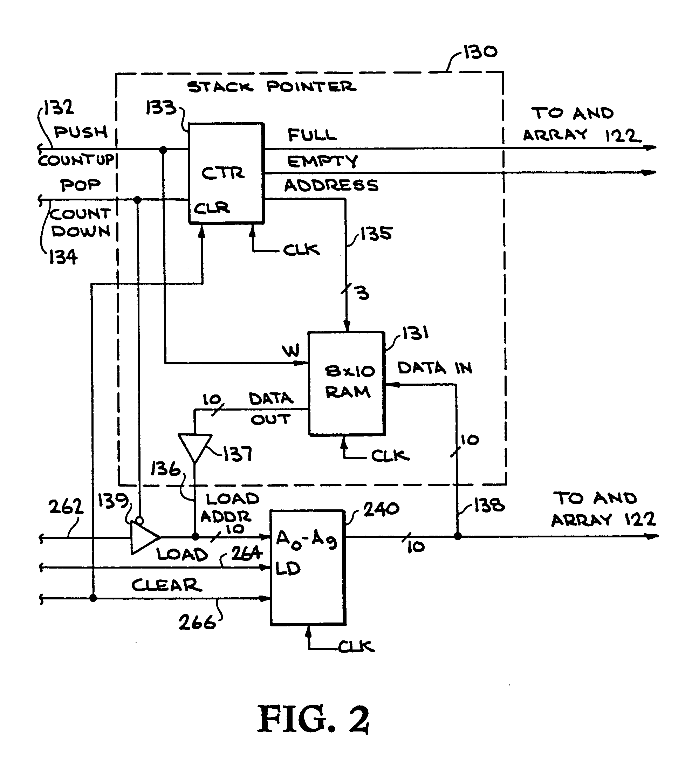

With reference to Fig. 2, one embodiment of the stack 130 is illustrated within the dashed line. A random access memory (RAM) 131, having eight addressable memory locations, each capable of storing a 10-bit word, receives from counter 240 the data word via signal lines 138. A counter (CTR) 133 within stack 130 receives from the OR array 126 the PUSH and POP signals, via lines 132 and 134. The counter 133 is preferably a modulo 8 ring counter and upon reception of a PUSH signal, increments its contents by one (modulo 8), and upon reception of a POP signal, decrements its contents by one (modulo 8); typically synchronized by the CLK signal which the counter 133 receives. The counter 133 also receives the CLR signal generated by the OR array 126 and reception of this signal resets the contents of the counter to ZERO, typically.

The counter 133 generates on signal lines 135 a set of three count value signals, which, encoded via binary, represent the present value "pointed" to in the stack 130. These count value signals are conducted to an address port of RAM 131, and provide the location within the RAM 131 to which data will be written, as applied on lines 138, or from which data will be read. In the former case, the PUSH signal generated by OR array 126 is received at a write enable (W) terminal of RAM 131 to permit enabling of the RAM 131 for writing.

Data read from RAM 131 is conducted via signal lines to a set of ten enable/disable buffers 137 which are in turn connected to the set of signal lines 26 carrying the LOAD ADDRESS signals. The buffers 137, and a tri-state buffer 139, receive the POP signal generated by OR array 126 at a true and a complemented enable terminal, respectively. Tri-state buffers 139 are located on the signal lines 262 before their connection to the buffers 137.

Although not shown in Fig. 1, in the interests of clarity, the counter 133 employed within stack 130 can generate a STACK FULL and a STACK EMPTY signal indicative of the contents of the counter 133 being seven, or zero, respectively.

Generally, the operation of stack 130 is similar to that of last-in, first-out (LIFO) stack mechanisms and will be understood by those skilled in the art. Briefly, reception of a PUSH signal on line 132 causes the contents of counter 240, representing the present "state", to be transferred to the stack 130 via signal lines 138. The present state is then stored at the current position represented by a stack "pointer" on the stack 130; the term used in the art being "pushed" onto the stack. The value of the stack pointer is then updated to reflect the pushing of this present state onto the stack 130. A converse "POP" operation is performed by reception of a POP signal on line 134, which causes the contents of the stack 130, at the position represented by the current value of the stack pointer, to be transferred to the counter 240 via signal lines 136. The state value so popped replaces the contents of counter 240. The push and pop operations are synchronized by means of the clock signal received by the counter 240 and stack 130.

Stack 130, in a preferred embodiment, employs an internal incrementer, not shown in Fig. 2, which increments by one each state count value received from counter 240 prior to storage in the stack, i.e., when the PUSH signal is asserted on signal line 132. When the POP signal is inserted on signal line 134, the most-recently value stored on stack 130, i.e., the state count value plus one, is transferred to counter 240.

The buffers 137, internal to the stack 130, and the tri-state buffers 139 receive the POP signal, and the counter 240 becomes non-responsive to LOAD ADDRESS signals generated by the control-sequencing OR array 126 while the POP signal is asserted. Assertion of the POP signal also causes the counter 240 to internally set the LOAD signal HIGH, irrespective of the LOAD signal generated by the OR array 126, and the contents of the stack 130 is then transferred to the counter 240 via the tri-state buffers 139, as will be appreciated by those skilled in the art. Assertion of the CLR signal on line 266 causes the value of the stack pointer to be reset to a predetermined value, such as zero.

By pushing the contents of counter 240 onto stack 130 and simultaneously loading the counter 240 with a jump address generated by OR array 126, a subroutine call can be executed, as will be appreciated by those skilled in the art. By popping the state count so-stored from the stack 130 back to the counter 240, a return from the subroutine can be performed.

It is to be emphasized that loading of counter 240 is a separate operation from pushing the contents of the counter onto stack 130. Accordingly, the stack 130 can be used to store state information without branching, in a particular application.

In a preferred embodiment, stack 130 is eight levels deep, allowing up to eight nested subroutines to be executed. The stack pointer in this instance, operates in a modulo 8 mode, as will be appreciated by those skilled in the art. While not shown in Fig. 1, signals reflecting the status of the stack 130, such as STACK FULL and STACK EMPTY signals, can be generated by stack 130 and conducted to the AND array 122 for use therein in preventing stack "overflow" and "underflow".

The programming of the PLC device 100 of the instant invention is preferably done via high level language (HLL) constructs. Provision of the high level RAM 110 and stack 130 circuit elements within the PLC 100 facilitates this programming and the consequent understandability of the resulting program. An exemplary syntax is shown in the accompanying table

TABLE

Syntax of High Level Language

| Statement Type | Statement Name | Parameters | Meaning |
|---|---|---|---|
| DEFINE | INPINS | Signal Names | Define signal names |
| | OUTPINS | Signal Names | Define signal names |
| STATEMENT | INPUT | | |
| | PRIOR | | Priority encoding of input signals |
| | OUTPUT | | Generate signals |
| | OUTIN | | Test Feedback signals |
| | BURD n | Buried Register n | Test buried register signals/generate outputs |
| | DELAY | | Hold output signal(s) for certain number of clock cycles |
| | HOLD | Inputs Only | Hold input signal(s) for certain number of clock cycles |
| | RELEASE | Inputs Only | Release input signal(s) from hold |
| | IF THEN ELSE | Statement Label(s) | |
| | WHILE DO | Statement Label(s) | |
| | FOR DO | Statement Label(s) | |
| | CASE OF | Statement Label(s) | |
| | GOTO | Statement Label | Direct Branch |
| | GOTOR | Statement Label | Relative Branch |
| | ENABLE | Outputs Only | Enable Buffer |
| | DISABLE | Outputs Only | Disable Buffer |

| RESET | | Reset Register |
| PRESET | | Preset Register |
| PRELOAD | | Preload Register |
| GOSUB | Statement Label | Direct Subroutine Branch |
| GOSUBR | Statement Label | Relative Subroutine Branch |
| RETURN | | Return from Subroutine |
| STORE | Address,=Data | Store Data in RAM 110 at Address |
| RAMREAD | Address,[bit number] | Read RAM 110 at Address and bit number |

The meaning of all the statements shown in the Table, other than the last five, which refer to the stack 130 and the RAM 110, is to be found in the related, copending application "Flexible Progammable Logic Controller", which description is incorporated by reference herein.

The GOSUB and GOSUBR statements are direct and relative subroutine calls, respectively, which are implemented by the stack 130 pushing the current state count onto the stack and loading the counter 240 with the absolute address of the first instruction of the subroutine, in the case of the GOSUB statement or the relative address of the first instruction, in the cae of GOSUBR statement. The RETURN statement is placed in the subroutine to cause a return to the point in the calling routine next-following the GOSUB or GOSUBR statement which invoked the subroutine. The RETURN statement is implemented by popping the state count off the stack 130 onto the counter 240.

The STORE statement is implemented by the RAM 110 which receives signals on line 112 representing the address parameter, and signals on line 116 representing the data parameter. The data is then stored in the appropriate location in RAM 110. The RAMREAD statement causes signals representing the contents of the location within RAM 110 represented by the address parameter to be generated on lines 118 to be fedback to AND array 122. An optional bit number parameter permits selection of a particular bit position within the location be read; the remaining signals generated on lines 118 being generated to correspond to ZERO.

The STORE statement, implemented by the RAM 110 of the PLC 100, afords the user the ability to externally update the data stored in the RAM 110 via the AND array 122. As this data can be recalled by the RAMREAD statement and fedback to the AND array 122, the RAM 110 can be selectively used for storage of externally-updatable control information, such as generated by a host central processing unit (CPU), and the operation of the PLC 100 can be changed dependent on this control information. The RAM 110 thus provides for storage of external data, in addition to the storage provided by buried registers 200. Typical applications of this use of the RAM 110 is in direct memory access (DMA) controllers, interrupt controllers and video controllers.

The STORE and RAMREAD statements also allow the RAM 110 to be used as a "scratch pad". Using signals generated by the output generation OR array 124, any location within the RAM 110 can be written to or read from. These locations can be used as separate independent counting and timing channels, such as required by a refresh timer for a memory controller.

Alternative embodiments of the instant invention would employ a RAM 110 together with the programmable logic circuit 120, but omitting the counter 240, thereby providing a PAL- or PLA-based device having a RAM for easy storage of data, other than in the buried registers 200. Alternatively, either a RAM 110, or a stack 130, could be employed alone with the PLC device having the counter 240.

**Claims**

8

1. A programmable logic device comprising:

a programmable array means (120) arranged to be responsive to input signals applied to array inputs (128,129) to generate a plurality of logic signals;

output means (160) connected to received a first number of said logic signals, and generate a number of device output signals therefrom at an associated number of input/output ports (320) of the device;

a status register (240) connected to receive a second number of said logic signals and arranged to store data derived therefrom and to generate a status word data output signal:

characterised by;

stack means (130) connected to be responsive to a third number of said logic signals as control signals and arranged to store, on a first-in last-out basis, status words passed from said status register (240), and to remove the last-in contents of the stack and generate therefrom a stack output signal comprising the last stored status word on a status word output thereof.

2. A logic device according to claim 1, characterised by first means (137,139) for passing said stack output signal to said status word register (240).

3. A logic device according to claim 2, characterised in that said first means comprises means for selectably coupling the input of said status register (240) with either said second number of logic signals or said status word output of said stack (130).

4. Logic device according to claim 1,2, or 3 characterised by second means for passing said stack output signal to a first number said array inputs comprising;

means for loading said status register (240) with a status word represented by said stack output signal; and

means for passing said data output signal of said status register (240) to said first number of said array inputs.

5. A logic device according to any preceding claim, characterised in that status register (240) further has a load instruction input coupled to receive one of said logic signals.

6. A logic device according to claim 5, characterised in that said second number of logic signals includes a load address signal and a load instruction signal; whereby reception of said load control signal causes said status register (240) to replace the contents thereof with the load address.

7. A logic device according to any preceding claims, characterised in that status register (240) comprises a preloadable counter.

8. A logic device according to any preceding claim, characterised in that said counter is a gray code counter.

9. A logic device according to any preceding claim 1, characterised in that said second number of logic signals includes a clear signal and in that said status register (240) is responsive to said clear signal, reception of said clear signal causing said status register (240) to hold a predetermined word.

10. A logic device according to claim 9, characterised in that said stack means (130) is also responsive to said clear signal, reception of said clear signal causing all contents of said stack means to be removed.

11. A logic device according to any preceding claim, characterised in that said third number of logic signals includes a push and a pop signal; whereby reception of said push signal causes said status counter (240) to generate said data output signal and causes said stack means (130) to store that data output signal; and whereby reception of said pop signal causes said stack means (130) to remove the last in status word and generate said stack output signal comprising that last-in status word and that status word output thereof.

12. A logic device according to any preceding claim, characterised in that said stack (130) has a "full" and an "empty" output, said "full" and "empty" outputs being coupled to respective array inputs.

**13.** A logic device according to any preceding claim, characterised in that said stack means (130) has a depth of greater than 1.

**14.** A logic device according to any preceding claim, characterised in that said programmable array means (120) comprises a first programmable combinatorial array portion (122) having array inputs and arranged to generate intermediate array output signals, and a second array portion (126) connected to receive a number of said intermediate array outputs and to generate therefrom said second and/or third number of logic signals.

**15.** A logic device as claimed in any preceding claims, characterised by a plurality of buried storage cell means (200) each connected to receive one of a fourth number of logic signals, and including means for storing that logic signal to generate a buried output signal therefrom.

**16.** A logic device as claimed in claim 13, characterised in that said programmable array means (120) receives a number of said buried output signals as a second number of said input signals.

**17.** A logic device according to any preceding claim, characterised in that said programmable array means (120) receives a number of said device output signals as a third number of said input signals.

**18.** A logic device according to any preceding claim, characterised in that said programmable array means (120) receives a fourth number of said input signals as a number of output signals from said status register (240).

**19.** A logic device according to any preceding claim characterised by:
   memory means (110) connected to receive a fifth number of said logic signals representing data, and is arranged to store those logic signals and to generate memory output signals indicative of said stored signals.

**20.** A logic device according to claim 19 characterised in that said programmable array means (120) receives said memory output signals as a sixth number of input signals.

**21.** A logic device according to claims 19 or 20 characterised in that said fifth number of logic signals includes memory address signals and a write enable signal and in that said memory means (110) has a plurality of storage locations each having a predetermined address, said memory means being responsive to said memory address and write enable signals so that reception of said write enable signals causes said memory means (110) to replace the contents of a storage location having an address represented by said address signals with data represented by said fifth number of logic signals.

**22.** A logic device according to any one of claims 19 to 21 characterised in that said memory means (110) is a random access memory.

**23.** A logic device according to any preceding claims, characterised in that said logic array means (120) is programmed to generate signals to perform the subroutines invoking steps of:
   a) transferring the contents of said status register (240) to said stack (130);
   b) incrementing a stack pointer; and
   c) loading said status register (240) with desired jump address values and providing the output of said status register (240) as inputs to said programmable logic array (120).

**24.** A logic device according to claim 23, further programmed to, perform in response to signals generated by said programmable logic array (120), the subroutine-return steps:
   d) loading said status register (240) with the contents of the top of said stack (130) (pop); and decrementing (modulo p) said stack pointer.

**25.** A logic device according to claim 13, further programmed to perform in response to signals generated by said programmable logic array, the clear step of:
   f) clearing said stack (130) to a predetermined value.

10

EP 0 238 230 B1

**Patentansprüche**

1. Programmierbare Logikeinrichtung mit:
   einer programmierbaren Array-Einrichtung (120), die derart ausgelegt ist, daß sie auf an Array-Eingänge (128,129) angelegte Eingangssignale hin mehrere Logiksignale erzeugt;
   einer Ausgangseinrichtung (160), die derart geschaltet ist, daß sie eine erste Anzahl der Logiksignale empfängt und daraus eine Anzahl von Einrichtungs-Ausgangssignalen an einer zugehörigen Anzahl von Eingangs-/Ausgangs-Ports (320) der Einrichtung erzeugt;
   einem Statusregister (240), das derart geschaltet ist, daß es eine zweite Anzahl der Logiksignale empfängt, und das derart ausgelegt ist, daß es daraus abgeleitete Daten speichert und ein Statuswortdatenausgangssignal erzeugt;
   **gekennzeichnet durch:**
   eine Stapeleinrichtung (130), die derart geschaltet ist, daß sie auf eine dritte Anzahl der Logiksignale als Steuersignale reagiert, und die derart ausgelegt ist, daß sie von dem Statusregister (240) übermittelte Statusworte auf First-in-last-out-Basis speichert, und daß sie den zuletzt eingegebenen Inhalt des Stapels wegnimmt und daraus an einem Statuswortausgang der Stapeleinrichtung (130) ein das letzte gespeicherte Statuswort beinhaltendes Stapelausgangssignal erzeugt.

2. Logikeinrichtung nach Anspruch 1, gekennzeichnet durch eine erste Einrichtung (137,139) zum Übermitteln des Stapelausgangssignals an das Statuswortregister (240).

3. Logikeinrichtung nach Anspruch 2, dadurch gekennzeichnet, daß die erste Einrichtung eine Einrichtung zum selektiven Koppeln des Eingangs des Statusregisters (240) mit entweder der zweiten Anzahl von Logiksignalen oder dem Statuswortausgang der Stapeleinrichtung (130) aufweist.

4. Logikeinrichtung nach Anspruch 1, 2 oder 3, gekennzeichnet durch eine zweite Einrichtung zum Übermitteln des Stapelausgangssignals an eine erste Anzahl von Array-Eingängen, mit:
   einer Einrichtung zum Laden des Statusregisters (240) mit einem durch das Stapelausgangssignal repräsentierten Statuswort; und
   einer Einrichtung zum Übermitteln des Datenausgangssignals des Statusregisters (240) an die erste Anzahl von Array-Eingängen.

5. Logikeinrichtung nach einem der vorhergehenden Ansprüche, dadurch gekennzeichnet, daß das Statusregister (240) ferner einen Ladeinstruktionseingang aufweist, der zum Empfangen eines der Logiksignale geschaltet ist.

6. Logikeinrichtung nach Anspruch 5, dadurch gekennzeichnet, daß die zweite Anzahl von Logiksignalen ein Ladeadressensignal und ein Ladeinstruktionssignal enthält; wobei der Empfang des Ladesteuersignals bewirkt, daß das Statusregister (240) seinen Inhalt durch die Ladeadresse ersetzt.

7. Logikeinrichtung nach einem der vorhergehenden Ansprüche, dadurch gekennzeichnet, daß das Statusregister (240) einen vorladbaren Zähler aufweist.

8. Logikeinrichtung nach einem der vorhergehenden Ansprüche, dadurch gekennzeichnet, daß der Zähler ein Gray-Kode-Zähler ist.

9. Logikeinrichtung nach einem der vorhergehenden Ansprüche, dadurch gekennzeichnet, daß die zweite Anzahl von Logiksignalen ein Löschsignal aufweist und daß das Statusregister (240) auf das Löschsignal reagiert, wobei der Empfang des Löschsignals das Statusregister (240) dazu veranlaßt, ein vorbestimmtes Wort zu halten.

10. Logikeinrichtung nach Anspruch 9, dadurch gekennzeichnet, daß die Stapeleinrichtung (130) ebenfalls auf das Löschsignal reagiert, wobei der Empfang des Löschsignals bewirkt, daß sämtliche Inhalte der Stapeleinrichtung entfernt werden.

11. Logikeinrichtung nach einem der vorhergehenden Ansprüche, dadurch gekennzeichnet, daß die dritte Anzahl der Logiksignale ein Einspeicher- und Entnahmesignal enthält, wobei der Empfang des Einspeichersignals das Statusregister (240) zum Erzeugen eines Datenausgangssignals veranlaßt und die

11

Stapeleinrichtung (130) zum Speichern dieses Datenausgangssignals veranlaßt, und wobei der Empfang des Entnahmesignals die Stapeleinrichtung (130) zum Entfernen des zuletzt eingegebenen Statuswortes und zum Erzeugen des Statusausgangssignals veranlaßt, das dieses zuletzt eingegebene Statuswort und dessen Statuswortausgangssignal beinhaltet.

12. Logikeinrichtung nach einem der vorhergehenden Ansprüche, dadurch gekennzeichnet, daß die Stapeleinrichtung (130) einen "Full"- und einen "Empty"-Ausgang aufweist, wobei die "Full"- und "Empty"-Ausgänge mit betreffenden Array-Eingängen verbunden sind.

13. Logikeinrichtung nach einem der vorhergehenden Ansprüche, dadurch gekennzeichnet, daß die Tiefe der Stapeleinrichtung (130) größer als 1 ist.

14. Logikeinrichtung nach einem der vorhergehenden Ansprüche, dadurch gekennzeichnet, daß die programmierbare Array-Einrichtung (120) einen ersten programmierbaren kombinatorischen Array-Bereich (122), der Array-Eingänge hat und zum Erzeugen von Array-Zwischenausgangssignalen ausgelegt ist, und einen zweiten Array-Bereich (126) aufweist, der zum Empfangen einer Anzahl der Array-Zwischenausgangssignale und zum Erzeugen der zweiten und/oder dritten Anzahl von Logiksignalen daraus geschaltet ist.

15. Logikeinrichtung nach einem der vorhergehenden Ansprüche, gekennzeichnet durch mehrere vergrabene Speicherzelleneinrichtungen (200), von denen jede zum Empfangen eines Signals einer vierten Anzahl von Logiksignalen geschaltet ist, und mit einer Einrichtung zum Speichern dieses Logiksignals zur Erzeugung eines vergrabenen Ausgangssignals daraus.

16. Logikeinrichtung nach Anspruch 13, dadurch gekennzeichnet, daß die programmierbare Array-Einrichtung (120) eine Anzahl vergrabener Ausgangssignale als zweite Anzahl der Eingangssignale empfängt.

17. Logikeinrichtung nach einem der vorhergehenden Ansprüche, dadurch gekennzeichnet, daß die programmierbare Array-Einrichtung (120) eine Anzahl der Einrichtungs-Ausgangssignale als dritte Anzahl der Eingangssignale empfängt.

18. Logikeinrichtung nach einem der vorhergehenden Ansprüche, dadurch gekennzeichnet, daß die programmierbare Array-Einrichtung (120) eine vierte Anzahl der Eingangssignale als Anzahl von Ausgangssignalen von dem Statusregister (240) empfängt.

19. Logikeinrichtung nach einem der vorhergehenden Ansprüche, gekennzeichnet durch eine Speichereinrichtung (110), die zum Empfang einer fünften Anzahl von Logiksignalen, die Daten repräsentieren, geschaltet ist und zum Speichern dieser Logiksignale sowie zum Erzeugen von die gespeicherten Signale angebenden Speicherausgangssignalen ausgelegt ist.

20. Logikeinrichtung nach Anspruch 19, dadurch gekennzeichnet, daß die programmierbare Array-Einrichtung (120) die Speicherausgangssignale als sechste Anzahl von Eingangssignalen empfängt.

21. Logikeinrichtung nach Anspruch 19 oder 20, dadurch gekennzeichnet, daß die fünfte Anzahl von Logiksignalen Speicheradressensignale sowie ein Schreibfreigabesignal beinhaltet und daß die Speichereinrichtung (110) mehrere Speicherstellen beinhaltet, von denen jede eine bestimmte Adresse hat, wobei die Speichereinrichtung auf die Speicheradressen- und die Schreibfreigabesignale derart reagiert, daß der Empfang von Schreibfreigabesignalen die Speichereinrichtung (110) dazu veranlaßt, den Inhalt einer Speicherstelle, deren Adresse durch die Adressensignale repräsentiert wird, durch von der fünften Anzahl von Logiksignalen repräsentierte Daten zu ersetzen.

22. Logikeinrichtung nach einem der Ansprüche 19 bis 21, dadurch gekennzeichnet, daß die Speichereinrichtung (110) ein Schreib-/Lese-Speicher ist.

23. Logikeinrichtung nach einem der vorhergehenden Ansprüche, dadurch gekennzeichnet, daß die Logik-Array-Einrichtung (120) programmiert ist zum Erzeugen von Signalen zur Ausführung von Unterprogrammen, die folgende Schritte hervorrufen:
a) Übertragen des Inhaltes des Statusregisters (240) in die Stapeleinrichtung (130);

b) Inkrementieren eines Stapelzeigers; und

c) Laden gewünschter Sprungadressenwerte in das Statusregister (240) und Anlegen des Ausgangssignals des Statusregisters (240) als Eingangssignale an das programmierbare Logik-Array (120).

**24.** Logikeinrichtung nach Anspruch 23, ferner programmiert mit den folgenden Unterprogramm-Rücksprungschritten, die als Reaktion auf von dem programmierbaren Logik-Array (120) erzeugte Signale durchgeführt werden:

d) Laden des Statusregisters (240) mit dem Inhalt des oberen Endes des Stapels (130) (Entnahme) ; und Dekrementieren (modulo p) des Stapelzeigers.

**25.** Logikeinrichtung nach Anspruch 13, ferner programmiert mit dem folgenden Löschschritt, der als Reaktion auf von dem programmierbaren Logik-Array erzeugte Signale durchgeführt wird:

f) Löschen der Stapeleinrichtung (130) auf einen vorbestimmten Wert.

## Revendications

**1.** Un dispositif logique programmable comprenant:

un moyen de réseau programmable (120) configuré pour réagir à des signaux d'entrée appliqués aux entrées du réseau (128, 129) pour émettre une pluralité de signaux logiques;

des moyens de sortie (160) reliés pour recevoir un premier certain nombre desdits signaux logiques, et émettre de là un certain nombre de signaux de sortie de dispositif à un certain nombre associé de ports d'entrée / sortie (320) du dispositif;

un registre d'état (240) relié pour recevoir un deuxième certain nombre desdits signaux logiques et configuré pour stocker les données dérivées de là et pour émettre un signal de sortie de données de mot d'état;

caractérisé par:

un moyen de pile (130) relié pour réagir à un troisième certain nombre desdits signaux logiques comme signaux de commande et configuré pour stocker, sur une base premier entré, dernier sorti, les mots d'état transmis depuis ledit registre d'état (240), et pour retirer de la pile le dernier contenu entré et émettre de là un signal de sortie de pile comprenant le dernier mot d'état stocké sur une sortie de mot d'état de celle-ci.

**2.** Un dispositif logique selon la Revendication 1, caractérisé par des premiers moyens (137, 139) destinés à transmettre ledit signal de sortie de pile audit registre de mots d'état (240).

**3.** Un dispositif logique selon la Revendication 2, caractérisé en ce que lesdits premiers moyens comprennent des moyens pour coupler de manière sélective l'entrée dudit registre d'état (240) soit avec ledit deuxième certain nombre de signaux logiques, soit avec ladite sortie de mot d'état de ladite pile (130).

**4.** Un dispositif logique selon la Revendication 1, 2, ou 3, caractérisé par des deuxièmes moyens destinés à transmettre ledit signal de sortie de pile à un premier certain nombre desdites entrées de réseau, comprenant:

des moyens destinés à charger ledit registre d'état (240) avec un mot d'état représenté par ledit signal de sortie de pile; et

des moyens destinés à transmettre ledit signal de sortie de données dudit registre d'état (240) audit premier certain nombre desdites entrées de réseau.

**5.** Un dispositif logique selon l'une quelconque des Revendications précédentes, caractérisé en ce que le registre d'état (240) a en outre une entrée d'instruction de chargement couplée pour recevoir l'un desdits signaux logiques.

**6.** Un dispositif logique selon la Revendication 5, caractérisé en ce que ledit deuxième certain nombre de signaux logiques comporte un signal d'adresse de chargement et un signal d'instruction de chargement; par quoi la réception dudit signal de commande de chargement amène ledit registre d'état (240) à remplacer le contenu de celui-ci par l'adresse de chargement.

**7.** Un dispositif logique selon l'une quelconque des Revendications précédentes, caractérisé en ce que le registre d'état (240) comporte un compteur préchargeable.

**8.** Un dispositif logique selon l'une quelconque des Revendications précédentes, caractérisé en ce que ledit compteur est un compteur de code Gray.

**9.** Un dispositif logique selon l'une quelconque des Revendications précédentes, caractérisé en ce que ledit deuxième certain nombre de signaux logiques comporte un signal d'effacement et en ce que ledit registre d'état (240) réagit audit signal d'effacement, la réception dudit signal d'effacement amenant ledit registre d'état (240) à maintenir un mot prédéterminé.

**10.** Un dispositif logique selon la Revendication 9, caractérisé en ce que ledit moyen de pile (130) réagit aussi audit signal d'effacement, la réception dudit signal d'effacement vidant de tout contenu ledit moyen de pile.

**11.** Un dispositif logique selon l'une quelconque des Revendications précédentes, caractérisé en ce que ledit troisième certain nombre de signaux logiques comporte un signal d'empilage et un signal de dépilage; par quoi la réception dudit signal d'empilage amène ledit compteur d'état (240) à émettre ledit signal de sortie de données et amène ledit moyen de pile (130) à stocker ce signal de sortie de données et par quoi la réception dudit signal de dépilage amène ledit moyen de pile (130) à enlever le dernier mot d'état entré et à émettre ledit signal de sortie de pile comprenant ce dernier mot d'état entré et cette sortie de mot d'état.

**12.** Un dispositif logique selon l'une quelconque des Revendications précédentes, caractérisé en ce que ladite pile (130) a une sortie "pleine" et une sortie "vide", lesdites sorties "pleine" et "vide" étant couplées aux entrées de réseau respectives.

**13.** Un dispositif logique selon l'une quelconque des Revendications précédentes, caractérisé en ce que ledit moyen de pile (130) a une profondeur supérieure à 1.

**14.** Un dispositif logique selon l'une quelconque des Revendications précédentes, caractérisé en ce que ledit moyen de réseau programmable (120) comprend une première portion de réseau combinatoire programmable (122) ayant des entrées de réseau et configurée pour émettre des signaux de sortie de réseau intermédiaires, et une seconde portion de réseau (126) reliée pour recevoir un certain nombre desdites sorties de réseau intermédiaires et pour émettre de là ledit second et/ou troisième certain nombre de signaux logiques.

**15.** Un dispositif logique selon l'une quelconque des Revendications précédentes, caractérisé par une pluralité de moyens de cellules de mémoire enterrés (200) étant chacun reliés pour recevoir l'un d'un quatrième certain nombre de signaux logiques, et comportant des moyens destinés à stocker ce signal logique pour émettre de là un signal de sortie enterré.

**16.** Un dispositif logique selon la Revendication 13, caractérisé en ce que ledit moyen de réseau programmable (120) reçoit un certain nombre desdits signaux de sortie enterrés comme deuxième certain nombre desdits signaux d'entrée.

**17.** Un dispositif logique selon l'une quelconque des Revendications précédentes, caractérisé en ce que ledit moyen de réseau programmable (120) reçoit un certain nombre desdits signaux de sortie de dispositif comme troisième certain nombre desdits signaux d'entrée.

**18.** Un dispositif logique selon l'une quelconque des Revendications précédentes, caractérisé en ce que ledit moyen de réseau programmable (120) reçoit un quatrième certain nombre desdits signaux d'entrée comme certain nombre de signaux de sortie en provenance dudit registre d'état (240)

**19.** Un dispositif logique selon l'une quelconque des Revendications précédentes, caractérisé par:
   un moyen de mémoire (110) relié pour recevoir un cinquième certain nombre desdits signaux logiques représentant les données, et configuré pour stocker ces signaux logiques et pour émettre des signaux de sortie de mémoire indicatifs desdits signaux stockés.

**20.** Un dispositif logique selon la Revendication 19, caractérisé en ce que ledit moyen de réseau programmable (120) reçoit lesdits signaux de sortie de mémoire comme sixième certain nombre de signaux d'entrée.

**21.** Un dispositif logique selon les Revendications 19 ou 20, caractérisé en ce que ledit cinquième certain nombre de signaux logiques comporte des signaux d'adresse de mémoire et un signal de validation d'écriture, et en ce que ledit moyen de mémoire (110) a une pluralité d'emplacements en mémoire ayant chacun une adresse prédéterminée, ledit moyen de mémoire réagissant auxdits signaux d'adresse de mémoire et de validation d'écriture afin que la réception desdits signaux de validation d'écriture amène ledit moyen de mémoire (110) à remplacer le contenu d'un emplacement en mémoire ayant une adresse représentée par lesdits signaux d'adresse par les données représentées par ledit cinquième certain nombre de signaux logiques.

**22.** Un dispositif logique selon l'une quelconque des Revendications de 19 à 21, caractérisé en ce que ledit moyen de mémoire (110) est une mémoire à accès sélectif.

**23.** Un dispositif logique selon l'une quelconque des Revendications précédentes, caractérisé en ce que ledit moyen de réseau logique (120) est programmé pour émettre des signaux pour effectuer les étapes d'appel de sous-programmes consistant à:
    a) transférer le contenu dudit registre d'état (240) à ladite pile (130);
    b) incrémenter un pointeur de pile; et
    c) charger ledit registre d'état (240) avec les valeurs d'adresse de branchement désirées et fournir la sortie dudit registre d'état comme entrée audit réseau logique programmable (120).

**24.** Un dispositif logique selon la Revendication 23, programmé en outre pour effectuer, en réponse aux signaux émis par ledit réseau logique programmable (120), les étapes de retour de sous-programme suivantes:
    d) charger ledit registre d'état (240) avec le contenu du sommet de ladite pile (130) (dépilage) et décrémenter (module p) ledit pointeur de pile.

**25.** Un dispositif logique selon la Revendication 13, programmé en outre pour effectuer, en réponse aux signaux émis par ledit réseau logique programmable, l'étape d'effacement consistant à:
    f) vider ladite pile (130) jusqu'à une valeur prédéterminée.

FIG.1

CLKOUT

CLOCK DECODE

120

122 — PROGRAM-MABLE AND ARRAY

CLK

CLKIN /LE/CE

INPUTS

INPUT CELL

140

128

FEEDBACK

129

124 — OUTPUT GENERA-TION OR ARRAY

126 — CONTROL SEQUE-NCING OR ARRAY

OUTPUT ENABLE

100

166

164

160

300 320

D Q MACRO CELL

162

168

I/O & OUTPUT PINS

OUT 180

ADDRESS 112

WRITE 114

DATA 116

RAM 110

DATA OUT

118

BURIED REG.

220

D Q 200

280

PUSH 132

POP 134

STACK 130

138

LOAD STATE

LOAD ADDR 136

A₀-A9

LOAD 262

LD 240

CLR 264

266

CLK

340

EP 0 238 230 B1

FEEDBACK FROM PINS

FIG. 2